(19) Europäisches Patentamt / European Patent Office / Office européen des brevets

(11) **EP 4 011 760 A1**

(12) **EUROPEAN PATENT APPLICATION**

(43) Date of publication:
**15.06.2022 Bulletin 2022/24**

(21) Application number: **20020603.5**

(22) Date of filing: **10.12.2020**

(51) International Patent Classification (IPC):
**B64C 3/14** *(2006.01)*

(52) Cooperative Patent Classification (CPC):
**B64C 3/14;** B64C 2003/149

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hirschel, Ernst Heinrich**
**85604 Zorneding (DE)**

(72) Inventor: **Hirschel, Ernst Heinrich**
**85604 Zorneding (DE)**

(74) Representative: **Blum, Heike**
**c/o AKLaw**
**Perchtinger Straße 6**
**81379 München (DE)**

(54) **SWEPT QUASI-THIN SUPERCRITICAL LAMINAR WING**

(57)    The invention relates to an aircraft comprising a transonic swept-back laminar wing, which is based on airfoils with a leading edge, wherein the swept wing and its airfoils are defined by a set of parameters comprising one or more of the parameters
• leading-edge sweep angle $\varphi_{0b}$,
• chord length (in free-stream direction) $C_b$,
• thickness ratio $r_{tb}$ and
wherein the set of parameters is defined by a reference wing and its reference airfoils, which are defined by a set of reference parameters comprising one or more of the given parameters
• leading-edge sweep angle $\varphi_{0a}$
• chord length (in free-stream direction) $C_a$,
• thickness ratio rta and
wherein the leading-edge sweep angle $\varphi_{0a}$ is expressed by a function of Equation 1 below

$$\varphi_{0b} = \frac{1}{u_\infty} \arc \sin(2,5 \sqrt{(v(\partial u\_e / \partial x)|\_AL)} \ Re_{CH)} \quad \text{(Equation 1)}$$

(equation 1)

and wherein thickness t of the wing is expressed by a function of Equation 2 below

$$t_b = r_{ta} \, c_a \, \cos\varphi_{0a} / \cos\varphi_{0b} \quad \text{(Equation 2)}$$

(equation 2)

and wherein the thickness ratio $r_{tb}$ of the wing is expressed by a function of Equation 3 below

$$r_{tb} = t_b / c_b \quad \text{(Equation 3)}$$

(equation 3)

Since the effect of attachment-line contamination also depends on the sweep angle $\varphi_0$ of the leading edge, it is postulated that the sweep angle of wing a can be reduced, if the thickness t of this wing is reduced, leading to the wing *b* compared to a reference wing a. However, it is important that the thickness ratio is kept constant:

$$r_t|b = r_t|a.$$

The benefit of the invention is that natural laminar flow (NLF) of current swept supercritical wings can be achieved

**(Cont. next page)**

without reduction of the transonic drag divergence Mach number $M_{dd}$. The invention avoids the application of supplementary systems on-board of the aircraft to have a Laminar Flow Control (LFC) system or a Hybrid Laminar Flow Control (HLFC) system, which would add complexity and weight to the airplane. Also avoided is the need of a Kruger flap, which shields the leading edge, but exerts an extra drag during take-off. The occurrence of isolated turbulent wedges is possible.

Fig. 5

**Description**

The invention relates to a swept wing which allows laminar flow while avoiding attachment-line contamination.

According to the Air Transport Action Group (ATAG), aviation is responsible for 12 per cent of CO2 emissions from all transport sources and accounts for around 2 per cent of all humanly generated CO2 emissions. Despite the present Corona pandemia it can be expected that the aviation industry will thrive further and passenger traffic will double over the next twenty years. Therefore, it is indispensable for the aeronautical community to take responsibility by creating and cultivating powerful technologies that are environmentally benign.

In the quest for greater efficiency of large transport aircraft, efforts to reduce wing drag through conventional aerodynamic tweaks have largely been exhausted. To achieve the next step change in efficiency, airframers will need to reduce drag by employing laminar-flow wings. This is made to reduce the drag of the aircraft and hence the fuel consumption.

Since many years, the possibility to laminarize the wing's boundary layer of aircraft has been a topic of research and industry. Transonic aircraft have back-swept wings with supercritical chord sections. This permits to fly at subsonic Mach numbers as high as possible, i.e., below a drag divergence Mach number $M_{dd}$, which should be as high as possible.

While the theory and potential benefits of avoiding or reducing turbulence in the boundary layer over the wing have been known since the late 1930s, the challenge has been the industrial-scale design and manufacture of wings that are both smooth enough to achieve laminar airflow and aerodynamically robust enough to sustain the desired effect in daily airline operations.

Within the CleanSky programme 'BLADE' - Breakthrough Laminar Aircraft Demonstrator in Europe - under management of Airbus a demonstrator was developed in order to access the feasibility of wings for passenger planes that allow a natural laminar flow under cruise conditions. This will help to reduce fuel consumption and emissions caused by air travel. According to Airbus estimates, laminar-flow wings could reduce drag by around 10 per cent, cutting fuel burn by up to 5 per cent on an 800 nm (1,480 km) sector. (Flightglobal, Analysis: Why Airbus foresees laminar wings on next-gen aircraft', https://www.flightglobal.com/analysis-why-airbus-foresees-laminar-wings-on-next-gen-aircraft/128247.article, downloaded on 25.11.2020).

Along the wing's leading edge, the air flow - the attachment-line flow - is from the wing root toward the wing tip. From the attachment line the flow diverges to the upper and to the lower side of the wing. The boundary-layer flow along the leading edge can be a laminar one, provided it is stable and the turbulent boundary-layer flow, which comes from the front fuselage, is supressed.

"Very high" accuracy is required in the wing's design and assembly, as small disturbances - for example, gaps around leading-edge slats, fasteners, surface deformations - can prevent laminar flow. To this comes in aircraft operation the big problem of contamination due to dirt, insect cadavers and de-icing fluid.

In the BLADE programme carbon-fibre wing structures made it possible to design a wing with an appropriate 3D profile and surface properties to achieve laminar flow on the Airbus test bed, a modified A340 fitted with reshaped wing sections outside the outboard engines. The experimental wing sections were designed to generate natural laminar flow (NLF) - as opposed to hybrid laminar flow (HLF), which is artificially induced through hardware in the wing.

Wings of transonic transport aircraft have rather high leading-edge sweep angles. Ahead of the BLADE flight tests, Airbus said that natural laminar flow cannot be sustained over a wing with a comparatively high sweep angle. The A340's original wing - which is designed for cruise speeds of M = 0.82-0.84 for long-haul flights - has a sweep angle $\varphi_0$ of approximately 30°, whereas the experimental laminar-flow BLADE sections have a sweep angle of around 20°.

Basically, three boundary-layer transition paths are to be considered:

1) transition following Tollmien-Schlichting instability, present on unswept and swept wings,
2) transition following cross-flow instability, present on swept wings, together with 1), and
3) attachment-line contamination, present on swept wings, together with 1) and 2).

Concerning the transition paths 1 and 2 we note that for rather low leading-edge sweep angels and Reynolds numbers natural laminar flow (NLF) can be achieved by a suitable wing-chord shaping: laminar airfoil. At higher sweep angles and Reynolds numbers shaping and suction through the wing's surface becomes necessary: hybrid laminar flow (HLF). In both cases the wing surface must be sufficiently smooth, i.e., surface irregularities must be sub-critical.

The suction system for hybrid laminar flow means a large technical effort, which leads to a considerable system complexity. This so far has prevented the implementation of this solution, even if test applications, for instance at a vertical stabilizer, have shown its effectiveness.

Transition path 3 is at the center of the present invention. The boundary layer along the attachment line of a swept wing is prone to surface disturbances in the form of insect cadavers, dirt, surface imperfections, which can trigger turbulence. Laminarization also here can be established by surface suction, see, e.g., the European patent application EP 3173328 A1. Again, this means a high system complexity.

A potential means to keep leading edges clean are Kruger flaps along the wings' leading edge. Kruger flaps - which are housed in the lower-wing structure, aft of the leading edge and extended accordingly - are being considered to serve both as high-lift devices for take-off and landing, and as a shield to protect the leading edge from insect and so on contamination and potential damage from foreign object debris. The drawback of Kruger flaps at take-off is the large additive drag in the acceleration phase of the aircraft.

It is therefore the objective of the present invention to improve an aircraft with swept-back wings such that it is possible to laminarize the wing's boundary layer while avoiding attachment-line contamination.

The solution to the objective is provided by the features of the independent claims 1.

Typical transonic aircraft, for instance the Airbus A320, have back-swept wings with supercritical chord sections. This permits to fly at subsonic Mach numbers as high as possible, i.e., below a drag divergence Mach number $M_{dd}$, which should be as high as possible. Along the wing's leading edge, the air flow - the wing attachment-line flow - is from the wing root toward the wing tip.

Since the effect of attachment-line contamination also depends on the sweep angle $\varphi_0$ of the leading edge, it is postulated that the sweep angle can be reduced, if the maximum thickness t of the wing is reduced, leading to the wing *b* compared to a reference wing a. However, it is important that the thickness ratio is kept constant:

$$r_t|_b = r_t|_a.$$

The benefit of the invention is that natural laminar flow (NLF) of current swept supercritical wings can be achieved without reduction of the transonic drag divergence Mach number $M_{dd}$. The invention avoids the application of supplementary systems on-board of the aircraft to have a Laminar Flow Control (LFC) or Hybrid Laminar Flow Control (HLFC), which both add complexity and weight of the airplane. It further allows to abstain from the use of a Kruger flap with its additional drag in the take-off phase of the aircraft. Locally of course turbulent wedges over the wing are possible.

The general result of the invention is that the necessary reduction of the maximum thicknesses t of the chord sections of the reference wing depends on its original sweep angle. The larger that is, the more must t be reduced to achieve the desired effect according to a criterion, which is given below. The higher $M_\infty$, the larger is $\varphi_0$.

It will be shown in an example that the reduction of the thickness t by 10 per cent already leads to the halving of the sweep angle $\varphi_0$. If the reference wing has $\varphi_0 = 35°$, a reduction of 14 per cent of t would be necessary, with $\varphi_0 = 25°$ about seven per cent are needed. In any case a reduction of t as high as possible is desirable, depending on the structure and material layout of the wing.

In view of the extraordinary strong effect of reduction of t, the needed amount of reduction according to the below given criterion in any case is rather small. The above used term 'reference wing' alludes to a wing with customary layout, for example like the layout of an Airbus A321. As a result, having reference wings with approximately $20° \leq \varphi_0 \leq 40°$ leading-edge sweep, it is suggested to reduce the thickness t by 5 to 15 per cent to achieve a reduction of the leading-edge angle $\varphi_0$ in order to fulfil the given criterion.

Further embodiments of the invention are disclosed in the dependent claims 2 to 6, in the description and in the related drawings.

The invention is explained in the following based on preferred embodiments with reference to the accompanying drawings, in which:

Fig. 1 shows a layout of a reference aircraft with back-swept wing according to the prior art,

Fig. 2 shows an airfoil cross-section of the wing area S as encircled in Fig. 1 on the left wing,

Fig. 3a shows a section of the leading edge of an unswept wing with a turbulent wedge,

Fig. 3b shows a section of the leading edge of a swept wing of a reference aircraft according to Fig. 1 with attachment-line contamination,

Fig. 4 shows a schematic sketch of the sweep angle change of a swept wing with a) the referenced swept wing in full lines and b) the thinner swept wing with the smaller sweep angle in broken lines,

Fig. 5 shows a schematic sketch of the sweep angle change of a tapered swept wing with a) the referenced swept wing in full lines and b) the thinner swept wing with the smaller sweep angle in broken lines, and

Fig. 6 shows an airfoil stack of the wing of the Common Research Model (CRM), NASA.

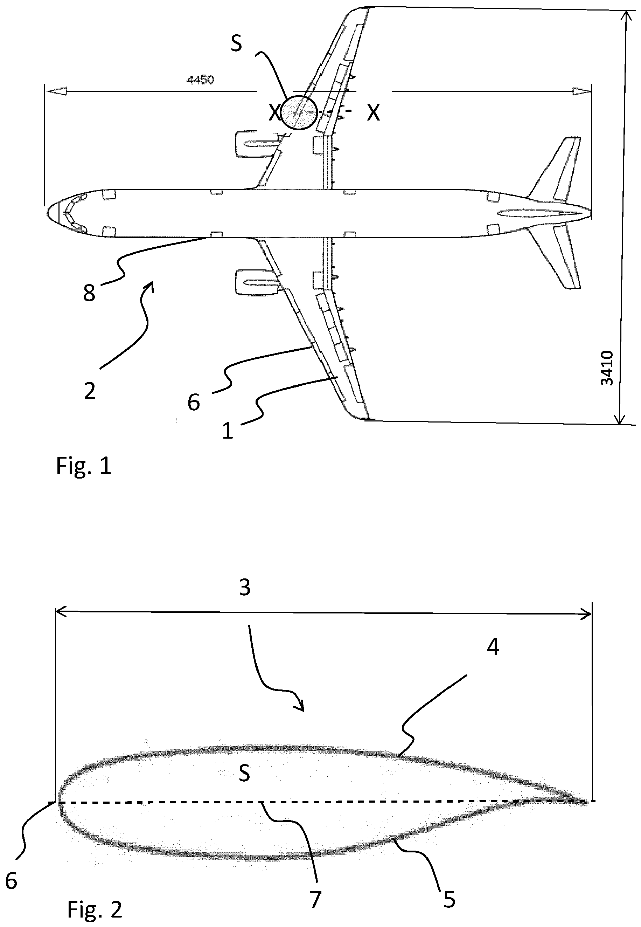

The embodiment according to **Fig. 1** illustrates the basic geometry of a swept wing 1. The invention is explained with, for instance, the wing of an Airbus A321, as a reference wing. The A321 belongs to the A320 family, which are configured as a low wing monoplane featuring a wing 1 with a sweep-back angle of 25 degrees. The jet with a single-aisle narrow-body fuselage is powered by two engines 3 located under each wing 1. The A320 specifications make it a direct competitor to the Boeing 737 family of aircraft. A number of key aircraft parameters and characteristics are given below:

| • Wingspan: | 34.10 m, with sharklets 35.8 m |
| • Wing Area: | 122.6 m$^2$ |
| • Wing Sweep Back angle $\varphi_{0a}$ : | 25 degrees |
| • Cruising Speed: | Mach 0.78 |
| • Maximum Operating Speed: | Mach 0.82 |

For the understanding of the invention, the embodiment of the Airbus A321 aircraft is defined as a reference aircraft with reference wing 1 characterised by a set of reference parameters.

The fixed wing aircraft 1 has a wing 1 with an airfoil 3 cross-section as illustrated in Fig. 2, defining an upper geometric surface 4 and a lower geometric surface 5, which meet at the geometric leading edge 6 of the wing 1. From the attachment line at or below the location 6 the air flow passes over the upper aerodynamic surface 4 and the lower aerodynamic surface 5.

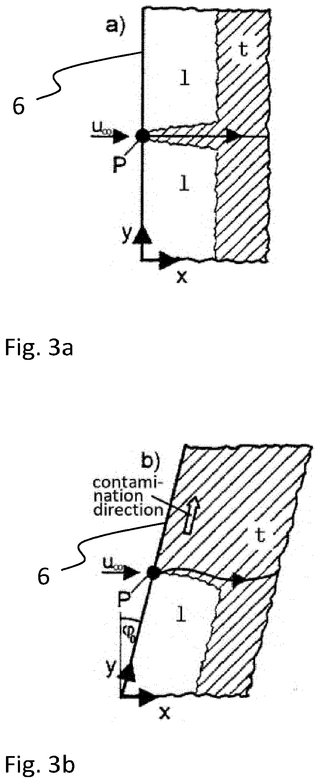

As further shown on the wing sections in **Figs. 3a** and **3b** ($u_\infty$ free stream, $\varphi_0$ leading-edge sweep angle, x coordinate in chord direction, y coordinate along the leading edge, l laminar boundary layer, t turbulent boundary layer), the boundary-layer flow along a swept leading edge 6 can be a laminar one, provided it is stable and the turbulent boundary-layer flow, which comes from the front fuselage 8, is supressed. This can be achieved, for instance, with a Gaster bump, a geometrical device, which leads to a stagnation point on the leading edge.

If now at some location on the attachment line a surface disturbance P is present (insect cadaver, soil, surface imperfection), this disturbance triggers turbulence, even if the boundary layer flow as such is stable. This turbulence can spread over both the upper and the lower side of the unswept wing in the form of a turbulence wedge as shown in **Fig.3a**, or, at a swept wing, along the whole remaining leading edge 6 and with that over the whole wing 1 as illustrated in **Fig. 3b.** The latter is called "leading-edge contamination" or more correctly "attachment-line contamination".

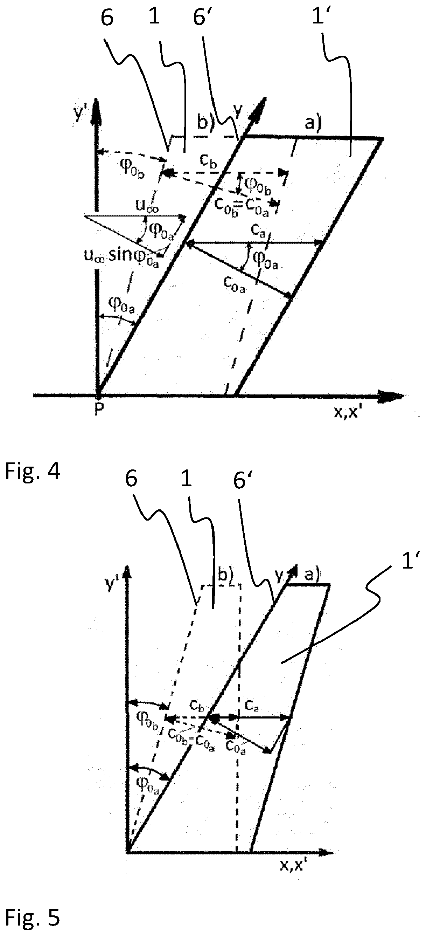

To find a wing geometry, it is critical to understand when attachment-line contamination at a swept leading edge happens and if at the attachment line a critical combination of the flow velocity - $\sin\varphi_0 u_\infty$ - along the leading edge together with the flow acceleration in chord direction - $(\partial u_e/\partial x)|_{AL}$ - is present. The physical parameters are reviewed in the following in the illustration of **Fig. 4** for a reference and a target wing section with a leading-edge sweep angle $\varphi_{0a}$ and $\varphi_{0b}$ respectively.

Consider the criterion of N.A. Cumpsty and M.R. Head (1967)

$$\mathrm{Re}_{CH} = \frac{0.4 \sin\varphi_0 u_\infty}{\sqrt{v(\partial u_e/\partial x)|_{AL}}} \qquad \text{(Equation 1)}$$

with $\varphi_0$ being the sweep angle of the leading edge 6, $u_\infty$ the free-stream (flight) speed or cruise speed, v the kinematic viscosity, $u_e$ the flow velocity in chord direction, x the coordinate in that direction (both holds for the upper and the lower side of the wing), AL means attachment line at the wings leading edge 6.

The criterion says that $\mathrm{Re}_{CH}$ is the lower, the lower the sweep angle is and the higher the acceleration in chord direction.

We note beforehand that according to the criterion the desired sweep angle $\varphi_{0b}$ of the leading edge 6 is

$$\varphi_{0b} = \frac{\arcsin(2{,}5\sqrt{(v(\partial u\_e/\partial x)|\_AL)}\,\mathrm{Re}_{CH)}}{u_\infty} \qquad \text{(Equation 1')}$$

Experimental low-speed data show that for approximately $\mathrm{Re}_{CH} \leq 100$ laminar flow is present, approximately $\mathrm{Re}_{CH} \approx 100 \pm 20$ indicates the critical domain, and for approximately $\mathrm{Re}_{CH} \geq 240$ turbulent flow is present along the leading edge 6. Criteria of other authors, also for compressible flow, give similar values.

Furthermore - regarding the drag divergence Mach number $M_{dd}$ - we note that the higher the thickness ratio $r_t$ = t/c of an airfoil is, the higher is the excess velocity $\Delta_u$ relative to the free-stream (flight) velocity. Here t is the maximum thickness of the airfoil (chord section) and c the chord length.

The excess velocity $\Delta_u$ can be quantified to first order with the result of potential theory for the flow past a flat elliptical cylinder

$$\Delta u = u_\infty \frac{t}{c}. \qquad \text{(Equation 2)}$$

The thinner the given flat cylinder with length c, the lower is $\Delta u$ and the higher is the drag-divergence Mach number $M_{dd}$. This result also holds for an airfoil and hence for the unswept wing with chord length $c_0$. But if the wing is swept, the free stream "sees" a wing with the chord length c = $c_0/\cos\varphi_0$, reference wing a) in **Fig. 4**. The effective chord length c is larger, and because t is the same as before, the corresponding thickness ratio $r_t$ is smaller and hence also the excess velocity $\Delta u$. The divergence Mach number $M_{dd}$, however, is higher. The excess velocity as well as the divergence Mach number therefore in principle depend on the wing's thickness ratio and on its sweep angle.

Equation 1 shows that the effect of attachment-line contamination first of all depends on the sweep angle $\varphi_0$ of the leading edge. We introduce a reference wing 1'. We postulate that the sweep angle can be reduced, if the thickness t of this wing is reduced, leading to the wing 1. The prerequisite is that the thickness ratio is kept constant:

$$r_t|_b = r_t|_a. \qquad \text{(Equation 3)}$$

The lower index a stands for the reference wing 1' with the sweep angle $\varphi_0$ and the thickness t, and the lower index b for the wing 1 with the reduced thickness $t_b$ and the correspondingly reduced sweep angle $\varphi_{0b}$, see **Fig 4.**

Equation (3) can be written as

$$t \cos\varphi_0 /c_0|_b = t \cos\varphi_0 /c_0|_a. \qquad \text{(Equation 4)}$$

Because $c_0$ is the same for both wings, **Fig. 4,** the necessary reduction of the wing's thickness to achieve the required size of $\sin\varphi_{0b}$, respectively $\varphi_{0b}$ and $\cos\varphi_{0b}$, can be written as

$$\cos\varphi_0 t|_b = \cos\varphi_0 t|_a. \qquad \text{(Equation 5)}$$

The result is that the necessary reduction of the thickness t of the reference wing 1' depends on its sweep angle. The larger that is, the more must t be reduced to achieve the desired effect. The higher $M_\infty$, the larger is $\varphi_0$.

The result is shown schematically in **Fig. 4** for the sweep angle change of the swept wing 1': a) The original swept wing (full lines). b) The thinner swept wing 1 with the smaller sweep angle (broken lines).

Example: rectangular wing (not shown in **Fig. 4**), $c_0$ = 4 m, $t_0$ = 0.55 m, $r_{t0}$ = 0.1375. Assume now that the wing is turned backward, sketch a), full lines. With $\varphi_{0a}$ = 30°, $\sin\varphi_{0a}$ = 0.5 and $\cos\varphi_{0a}$ = 0.866 the effective chord length becomes ca = 4.619 m. The thickness ratio with ta = $t_0$ = 0.55 m then is rta= 0.119. Assume now a reduction of the thickness t by 10 per cent to $t_b$ = 0.495 m. The sweep angle $\varphi_0$ is to be changed to keep the original thickness ratio $r_t$ = 0.119. With equation (5) we obtain $\cos\varphi_{0b}$ = 0.9622 and $\varphi_{0b}$ = 15.79°, sketch b), broken lines. This means $\sin\varphi_{0b}$ = 0.272, which is approximately half of sin 30°.

The effect of thickness reduction is extraordinarily strong. With 13 per cent reduction the resulting angle is $\varphi_{0b}$ = 5.48°, and $\sin\varphi_{0b}$ = 0.095. The limit is reached with a reduction of only 13.391 per cent to $t_b$ = 0.476 m. That means $\varphi_{0b}$ = 0°, and $\sin\varphi_{0b}$ = 0. The wing is unswept. Because the length now is $c_b$ = $c_0$ = 4 m, the thickness ratio is $r_{tb}$ = 0.119, like that of wing $a$. The reason for that strong effect is the opposite behaviour of $\cos\varphi_0$ and $\sin\varphi_0$.

Regarding the criterion of Cumpsty und Head, equation (1), we find that a reduction of the wing thickness t by 10 per cent leads to a halving of $\sin\varphi_0 u_\infty$, if the original thickness ratio is kept. This means that the velocity component along the leading edge is reduced by a factor of two. With a reduction of 13 per cent, that velocity component already is reduced by a factor of five.

The deciding terms in the $Re_{CH}$ correlation, equation (1), are $\sin\varphi_0$ and $(\partial u_e/\partial x)|_{AL}$. If the acceleration in chord (x-) direction is kept constant (with a given shape of the airfoil, the acceleration changes with ($\varphi_0$!), the sweep angle determines the magnitude of $Re_{CH}$.

For a tapered swept wing 1 the situation is more complex, as illustrated in **Fig. 5** (Schematic of the sweep-angle change of a tapered swept wing 6: a) The original swept wing 6' (full lines). b) The thinner swept wing 6 with the smaller sweep angle (broken lines)). We assume a straight trailing edge 6. At an arbitrary span location of the reference wing 1' an auxiliary triangle is introduced. It has the auxiliary normal wing chord length $c_{0a}$.

A reduction of $t_a$ by 10 per cent, like for the case above, leads to a reduction of the sweep angle from $\varphi_{0a}$ = 30° to $\varphi_{0b}$ = 15.79° and accordingly to the same reduction of $\sin\varphi_0$. A reduction by 13 per cent leads, as for the untapered wing, to $\varphi_{0b}$ = 5.48°.

Note that the reduction of the sweep angle reduces the wing surface. This would mean a higher wing loading, or if that is not desirable, a span increase may be a possibility, with the benefit of a higher aspect ratio, or the introduction of a suitable wing-tip device, or the change of a present wing-tip device. Further it is to be noted that the wing location is shifted in x-direction.

The general result is that the necessary reduction of the thickness t of the reference wing 1 in **Fig. 1** depends on its original sweep angle. The larger that is, the more must t be reduced to achieve the desired effect. The higher $M_\infty$, the larger is $\varphi_0$.

In other examples the reduction of the thickness t by 10 per cent already leads to the halving of $\varphi_0$. If the reference wing has $\varphi_0 = 35°$, a reduction of 14 per cent of t would be necessary, with $\varphi_0 = 25°$ about seven per cent are needed. In any case a reduction of t as high as possible is desirable, depending on the structure and material layout of the wing. In view of the extraordinary strong effect of reduction of t, the needed amount in any case is rather small. 'Reference wing' means the wing with customary layout, for example like the layout of an Airbus A321.

Supposed that the $Re_{CH}$ correlation is reliable - even if the data base must be substantiated and extended - it can be stated that a rather small reduction of the wing's thickness leads to a considerable reduction of the sweep angle $\varphi_0$ of the leading edge. With that the danger of attachment-line contamination is distinctly reduced and natural laminar flow (NLF) over a considerable portion of the wing becomes an option, although with the possibility of isolated turbulent wedges. Supplementary to this is the suppression of the fuselage boundary layer with, for instance, a Gaster bump. With a forward swept wing the boundary layer of the fuselage does not pose a problem.

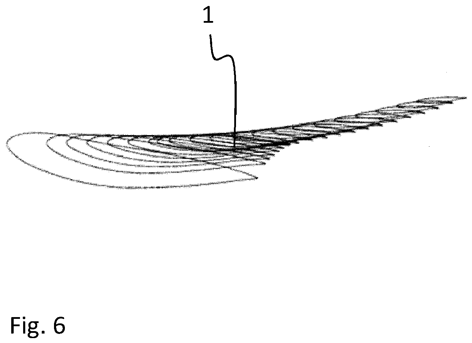

Transonic wings today have variable thickness ratios from the root to the tip with $r_t$ about 0.16 down to 0.1, even 0.05. Taper and variable camber and twist are the rule, but that is of minor importance. As an example, the airfoil stack of the wing of the NASA Common Research Model (CRM) is shown in **Fig. 6**. The basic effect of a reduction of the wing thickness t is given here, too. Necessary is the shaping of the chord sections in the sense of the supercritical laminar wing, in particular in view of the acceleration of the flow $(\partial u_e/\partial x)|_{AL}$ at the attachment line in chord direction.

A reduction of the wing thickness t of about 10 per cent and even somewhat more of the - in span direction variable - height t of current wing spars should be possible with a suitable structure and materials concept and that without losing the ability to carry the wing forces and moments. With that it should be possible to reduce sufficiently the leading-edge sweep angle $\varphi_0$ such that attachment-line contamination is avoided.

The height reduction should be achievable without a larger mass growth of the wing and without endangering the aeroelastic properties of the wing. On the positive side to be seen is the reduction of the aerodynamic twist of the wing structure. The integration of the propulsion system, of the aerodynamic control surfaces, of the elements of the lift-enhancing surfaces, all with their actuators and tracks, should be possible without impairments. The fuel tank volume may be reduced and needs additional volume in the fuselage if it is not compensated by the lower drag of the laminar wing flow.

**List of References**

1    wing
2    aircraft
3    airfoil
4    upper geometric surface
5    lower geometric surface
6    leading edge
7    airfoil geometric chord
8    fuselage

$c_0, c_a, c_b$    chord length
$M_{dd}$    drag-divergence Mach number
$M_\infty$    flight Mach number
$r_{ta}, r_{tb}$    thickness ratio
$,t_a, t_b$    thickness of the wing
$u_\infty$    free stream velocity
$\varphi_0$    leading-edge sweep angle

l    laminar boundary layer
P    surface disturbance
S    wing area
t    turbulent boundary layer
x    coordinate in chord direction
y    coordinate along the leading edge

**Claims**

1. Aircraft comprising a transonic laminar swept-back wing (1), which is based on airfoils (3) with a leading edge (6), wherein the swept wing (1) and its airfoils (3) are defined by a set of parameters comprising one or more of the parameters

   - leading-edge sweep angle $\varphi_{0b}$,
   - chord length (in free-stream direction) $c_b$,
   - thickness ratio rtb and

   wherein the set of parameters are defined by a reference wing (1') and its reference airfoils (3'), which are defined by a set of reference parameters comprising one or more of the given parameters

   - leading-edge sweep angle $\varphi_{0a}$
   - chord length (in free-stream direction) $c_a$,
   - thickness ratio $r_{ta}$ and

   wherein the leading-edge sweep angle $\varphi_{0a}$ is expressed by a function of Equation 1 below

$$\varphi_{0b} = \frac{1}{u_\infty} \arc \sin(2{,}5 \sqrt{(v(\partial u\_e/\partial x)|\_AL)} \, Re_{CH)}) \qquad \text{(Equation 1)}$$

   and wherein thickness t of the wing is expressed by a function of Equation 2 below

$$t_b = r_{ta} \, c_a \cos\varphi_{0a} / \cos\varphi_{0b} \qquad \text{(Equation 2)}$$

   and wherein thickness ratio $r_{tb}$ of the wing (1) is expressed by a function of Equation 3 below

$$r_{tb} = t_b/c_b \qquad \text{(Equation 3)}$$

2. Aircraft according to claim 1, **characterised in that** the critical Reynolds number is approximately $Re_{CH} \le 100$ to achieve laminar flow along the wing's leading edge (1).

3. Aircraft according to claim 1 or 2, **characterised in that** the thickness ratio $r_t$ is kept constant $r_t|_b = r_t|a$.

4. Aircraft according to any of the proceeding claims, **characterised in that** the reference parameters comprising one or more of the given parameters of transonic swept wings with

   - leading-edge sweep angle $\varphi_{0a} \approx 30° \pm 10°$
   - and thickness ratio with approximately $0{,}05 \le r_{ta} \le 0{,}16$

5. Aircraft according to any of the proceeding claims, **characterised in that** reduction of the maximum thickness t of the airfoil (3) of the aircraft (2) in comparison to the reference aircraft (2') depending on the nominal flight Mach number, is around the value of 10 per cent.

6. Aircraft according to any of the proceeding claims, **characterised in that** the wing has a variable thickness ratio from the wing root to the wing tip with approximately

$$0{,}05 \le r_{tb} \le 0{,}16.$$

Fig. 1

Fig. 2

Fig. 3a

Fig. 3b

Fig. 4

Fig. 5

1

Fig. 6

Europäisches
Patentamt

European
Patent Office

Office européen
des brevets

# EUROPEAN SEARCH REPORT

**Application Number**

EP 20 02 0603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG YUFEI ET AL: "Supercritical natural laminar flow airfoil optimization for regional aircraft wing design", AEROSPACE SCIENCE AND TECHNOLOGY, ELSEVIER MASSON, FR, vol. 43, 4 March 2015 (2015-03-04), pages 152-164, XP029233765, ISSN: 1270-9638, DOI: 10.1016/J.AST.2015.02.024 * Chapter 3.1 to Chapter 3.3 * * table 2 * * figures 7-10 * | 1-6 | INV. B64C3/14 |
| X | US 2012/043430 A1 (TRACY RICHARD R [US] ET AL) 23 February 2012 (2012-02-23) * paragraphs [0001] - [0030] * * figures 1-7 * | 1-6 | |
| X | Ciornei Simona: "Mach number, relative thickness, sweep and lift coefficient of the wing - An empirical investigation of parameters and equations", , 1 June 2005 (2005-06-01), XP055800952, Hochschule für Angewandte Wissenschaften Hamburg Retrieved from the Internet: URL:https://www.fzt.haw-hamburg.de/pers/Scholz/arbeiten/TextCiornei.pdf [retrieved on 2021-05-03] * tables D.1-D.8 * | 1-6 | TECHNICAL FIELDS SEARCHED (IPC) B64C |
| A | EP 1 942 053 A2 (ISRAEL AEROSPACE IND LTD [IL]) 9 July 2008 (2008-07-09) * paragraphs [0042] - [0073] * * figures 1-26 * | 1-6 | |

The present search report has been drawn up for all claims

| Place of search | Date of completion of the search | Examiner |
|---|---|---|
| Munich | 4 May 2021 | Glück, Michael |

EPO FORM 1503 03.82 (P04C01)

## ANNEX TO THE EUROPEAN SEARCH REPORT
## ON EUROPEAN PATENT APPLICATION NO.

EP 20 02 0603

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2021

| Patent document cited in search report | | | Publication date | Patent family member(s) | | | Publication date |
|---|---|---|---|---|---|---|---|
| US 2012043430 | A1 | | 23-02-2012 | EP | 2675706 | A1 | 25-12-2013 |
| | | | | US | 2012043430 | A1 | 23-02-2012 |
| | | | | WO | 2012112408 | A1 | 23-08-2012 |
| EP 1942053 | A2 | | 09-07-2008 | EP | 1942053 | A2 | 09-07-2008 |
| | | | | IL | 188669 | A | 28-02-2013 |
| | | | | US | 2008283674 | A1 | 20-11-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3173328 A1